# EUROPÄISCHE PATENTANMELDUNG

(11) **EP 1 710 154 A1**
(43) Veröffentlichungstag der Anmeldung: **11.10.2006**
(21) Anmeldenummer: 05010383.7
(22) Anmeldetag: 12.05.2005
(51) Int. Cl.: B62J 15/02, B62J 15/04

(54) **Spritzschutz**

(30) Priorität: 06.04.2005 DE 202005005471 U
(71) Anmelder: sks metaplast Scheffer-Klute GmbH, 59846 Sundern (DE)
(72) Erfinder: Lösing, Markus, 45131 Essen (DE)
(74) Vertreter: Brune, Axel

(57) **Zusammenfassung**

Spritzschutz für ein Fahrrad, umfassend mindestens einen flächigen Grundkörper (1), sowie einen Anschlussbereich (2) zur lösbaren Verbindung des Grundkörpers (1) mit dem Fahrrad, wobei der Anschlussbereich (2) mit Abstandhaltern (4) ausgestattet ist.

## Beschreibung

Die vorliegende Erfindung betrifft einen Spritzschutz für ein Fahrrad gemäß dem Oberbegriff des Anspruchs 1.

Ein Spritzschutz der zuvor genannten Art ist in unterschiedlichen Formen und Geometrien bekannt geworden, umfasst jedoch im Wesentlichen einen flächigen Grundkörper und einen Anschlussbereich, wobei der Anschlussbereich zur lösbaren Befestigung mit dem Rahmen des Fahrrades, vorzugsweise im Bereich des Vorderrades, eingerichtet ist.

Es ist weiterhin bekannt, dass beispielsweise Bowdenzüge oder Kabel entlang des Rahmens, insbesondere auf der Rahmenoberfläche verlegt werden müssen. Es ist intuitiv einsichtig, dass die Bowdenzüge und/oder Kabel hinderlich für die Montage, insbesondere für eine formschlüssige Montage, des Spritzschutzes sind.

Hier setzt die vorliegende Erfindung an und macht es sich zur Aufgabe einen Spritzschutz bereitzustellen, der eine vorteilhafte Montage trotz rahmenseitig vorgesehener Bowdenzüge und oder Kabeln ermöglicht.

Erfindungsgemäß wird diese Aufgabe durch einen Spritzschutz mit den kennzeichnenden Merkmalen des Anspruchs 1 gelöst. Dadurch, dass der Anschlussbereich mit Abstandhaltern ausgestattet ist, kann ein Freiraum zwischen dem Rahmen und dem Grundkörper freigehalten werden, der zur unproblematischen Durchführung von Kabeln und/oder Bowdenzügen geeignet ist.

Es kann weiterhin vorteilhafterweise vorgesehen sein, dass der Anschlussbereich als Mulde innerhalb des Grundkörpers ausgestaltet ist. Dementsprechend weist bereits der Anschlussbereich eine Form auf, die in vorteilhafter Weise mit der Rahmenoberfläche korrespondiert und insbesondere zur vorteilhaften Ausrichtung der Abstandhalter geeignet ist.

In einer weiteren vorteilhaften Ausgestaltung der vorliegenden Erfindung kann vorgesehen sein, dass der Anschlussbereich mit mindestens einer Bohrung zur lösbaren Aufnahme der Abstandhalter ausgestattet ist. Dementsprechend kann der erfindungsgemäße Spritzschutz, insbesondere die Anordnung der Abstandhalter, vorteilhafterweise an die Oberfläche des Rahmens und an den Abstand der Bowdenzüge bzw. Kabel zueinander angepasst werden.

Es kann weiterhin vorteilhafterweise vorgesehen sein, dass der Abstandhalter mit einem Schaft zum Einstecken in die Bohrungen ausgestattet ist. Dementsprechend kann der Abstandhalter in beliebige, und im Übrigen auch beliebig viele Abstandhalter, beispielsweise auch unterschiedliche Ausführungsformen von Abstandhalter, in die dafür vorgesehenen Bohrungen des Aufnahmebereiches eingesteckt werden.

Vorteilhafterweise kann zur Befestigung des Spritzschutzes am Rahmen des Fahrrades vorgesehen sein, dass randseitig des Anschlussbereiches Anschlüsse zur Befestigung von elastischen Bändern vorgesehen sind.

In einer weiteren vorteilhaften Ausgestaltung der vorliegenden Erfindung kann vorgesehen sein, dass der Grundkörper und/oder der Anschlussbereich mit Aussparungen entlang der Längsachse ausgestattet ist. Diese Aussparungen können ebenfalls zur kontrollierten Durchführung von Bowdenzügen bzw. Kabeln verwendet werden.

Zur Steigerung der Sicherheit des Radfahrers kann vorteilhafterweise vorgesehen sein, dass der Grundkörper randseitig zumindest abschnittsweise mit einem elastischen Randbereich ausgestattet ist. Dementsprechend können Berührungen oder Stöße des Benutzers vor den Spritzschutz abgefedert werden.

Es kann weiterhin vorteilhafterweise vorgesehen sein, dass der Anschlussbereich zumindest abschnittsweise mit einer Skala ausgestattet ist. Hierdurch wird eine Anbringung des Spritzschutzes an bereits bestehenden Gewindebohrungen, beispielsweise für einen Trinkflaschenhalter erleichtert, indem der Abstand der Bohrungen direkt mit der Skala abgelesen werden kann.

In diesem Zusammenhang kann vorteilhafterweise vorgesehen sein, dass die Skala als Vertiefung im Anschlussbereich ausgestaltet ist. Eine derartige Skala kann auf einfache Art und Weise hergestellt werden.

In diesem Zusammenhang kann weiterhin vorteilhafterweise vorgesehen sein, dass die Vertiefungen der Skala Kreuzungen ausbilden, die als Fixierhilfe für einen Bohrer zum Einbringen von Löchern für die Verschraubung geeignet sind.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine perspektivische Ansicht eines erfindungsgemäßen Spritzschutzes;
- Fig. 2: eine seitliche Ansicht auf einen erfindungsgemäßen Spritzschutz;
- Fig. 3: eine Draufsicht auf einen erfindungsgemäßen Spritzschutz;

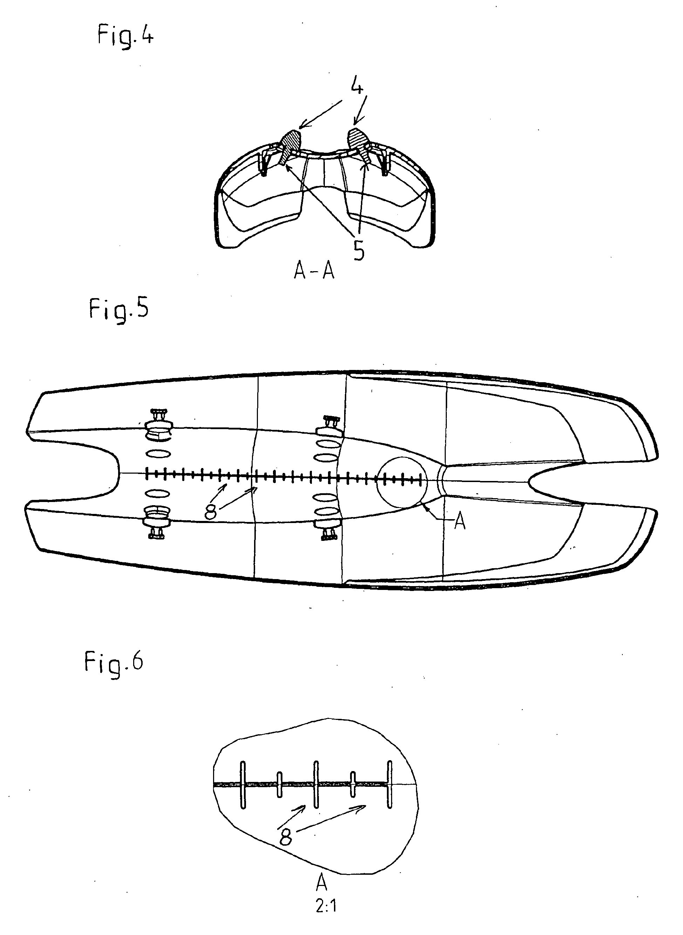

- Fig. 4: ein Schnitt gemäß A-A;
- Fig. 5: ein erfindungsgemäßer Spritzschutz mit einer Skala;
- Fig. 6: eine Detailvergrößerung einer Skala gemäß Einzelheit "A".

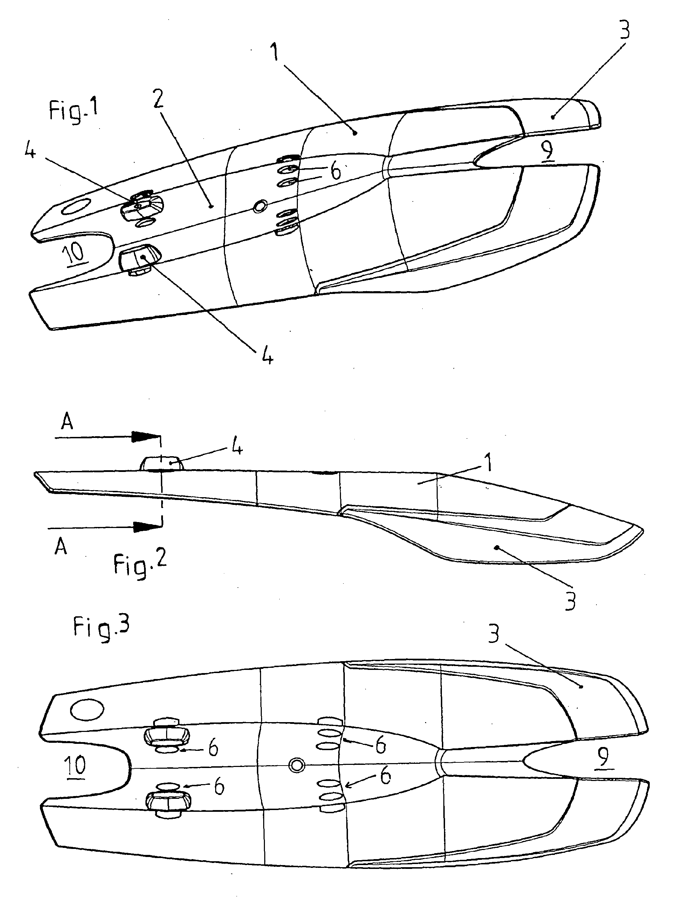

Zunächst wird auf Fig. 1 Bezug genommen.

Ein erfindungsgemäßer Spritzschutz umfasst im Wesentlichen einen flächigen Grundkörper 1, sowie einen Anschlussbereich 2.

Der Grundkörper 1 weist im Wesentlichen die Form eines Schutzbleches auf, ist jedoch insgesamt breiter und kürzer als ein "herkömmliches" Schutzblech ausgebildet. Eine derartige Ausführungsform wird auch als "DirtBoard" bezeichnet und eignet sich insbesondere für eine lösbare Anbringung im Bereich des vordern Rahmenabschnittes.

Es kann weiterhin vorgesehen sein, dass der Grundkörper 1 einen elastischen Randbereich 3 aufweist. Dieser Randbereich 3 ist vornehmlich dazu vorgesehen eine unbeabsichtigte Berührung des Spritzschutzes, beispielsweise durch das Knie des Radfahrers, abzufedern und das Unfallrisiko zu minimieren.

Der Anschlussbereich 2 ist etwa mittig des Grundkörpers 1 angeordnet und zumindest abschnittsweise als Mulde ausgeformt. Der Anschlussbereich 2 ist weiterhin mit einer Anzahl von Abstandhaltern 4 bestückt, die lösbar in dem Anschlussbereich 2 aufgenommen sind. Zur lösbaren Befestigung der Abstandhalter 4 weisen diese einen Schaft 5 auf, der in Bohrungen 6 des Anschlussbereiches 2 einsteckbar ist. Der Schaft 5 wiederum weist eine Wulst auf, die zur Befestigung in der Bohrung 6 dient. Da die Bohrungen 6 an unterschiedlichen Positionen des Anschlussbereiches 2 vorgesehen sind, kann eine individuelle Anpassung an die Oberfläche des Fahrradrahmens vorgenommen werden, indem die Abstandhalter 4 in die geeigneten Bohrungen 6 eingesteckt werden. Insbesondere wird durch die Abstandhalter 4 ein Freiraum zwischen Fahrradrahmen und dem Grundkörper 1 ausgebildet, so dass der erfindungsgemäße Spritzschutz unproblematisch in einem Bereich des Rahmens mit beispielsweise rahmenseitig verlegten Bowdenzügen und/oder Kabeln angebracht werden kann.

In diesem Zusammenhang ist weiterhin vorgesehen, dass der Grundkörper 1 mit einer Aussparung 9 bzw. der Aufnahmebereich 2 mit einer Aussparung 10 ausgestattet ist, die im wesentlichen zur Halterung bzw. Durchführung von Bowdenzügen und/oder Kabeln geeignet sind.

Zur lösbaren Befestigung des Spritzschutzes sind elastische Bänder (nicht dargestellt) vorgesehen, die in randseitig des Anschlussbereiches 2 vorgesehene Anschlüsse 7 eingehakt werden können. Dementsprechend können die elastischen Bänder zur Fixierung des Spritzschutzes um den Rahmen gespannt werden.

Es ist weiterhin vorteilhafterweise vorgesehen, dass der Spritzschutz im Anschlussbereich 2 mit einer Skala 8 ausgestattet ist, die sich insbesondere durch Vertiefungen im Material auszeichnet. Die hier vorgeschlagene Skala weist eine entlang der Längsachse des Grundkörpers ausgerichtete Vertiefung und eine Anzahl weiterer entlang der Längsachse angeordnete äquidistante Vertiefungen auf. Die Kreuzungen der Vertiefungen können in diesem Zusammenhang als Bohrmarkierungen dienen. Die Skala 8 dient im Wesentlichen dazu, den Spritzschutz auf unproblematische Art und Weise an bestehende Gewindebohrungen des Rahmens, die beispielsweise ursprünglich zu Montage eines Trinkflaschenhalters vorgesehen sind, anzubringen. Hierzu wird der Abstand der Bohrungen auf einfache Art und Weise mit der Skala abgemessen werden und anschließend die notwendigen Bohrungen im Bereich der Skala 8 eingebracht.

## Patentansprüche

1. Spritzschutz für ein Fahrrad, umfassend mindestens
- einen flächigen Grundkörper (1), sowie
- einen Anschlussbereich (2) zur lösbaren Verbindung des Grundkörpers (1) mit dem Fahrrad,
**dadurch gekennzeichnet, dass**
der Anschlussbereich (2) mit Abstandhaltern (4) ausgestattet ist.

2. Spritzschutz nach Anspruch 1, **dadurch gekennzeichnet, dass** der Anschlussbereich (2) als Mulde innerhalb des Grundkörpers (1) ausgestaltet ist.

3. Spritzschutz nach einem der vorhergehenden Ansprüche, **dadurch gekennzeichnet, dass** der Anschlussbereich (2) mit mindestens einer Bohrung (6) zur lösbaren Aufnahme der Abstandhalter (4) ausgestattet ist.

4. Spritzschutz nach einem der vorhergehenden Ansprüche, **dadurch gekennzeichnet, dass** der Abstandhalter (4) mit einem Schaft (5) zum Einstecken in die Bohrungen (6) ausgestattet ist.

5. Spritzschutz nach einem der vorhergehenden Ansprüche, **dadurch gekennzeichnet, dass** randseitig des Anschlussbereiches (2) Anschlüsse (7) zur Befestigung von elastischen Bändern vorgesehen sind.

6. Spritzschutz nach einem der vorhergehenden Ansprüche, **dadurch gekennzeichnet, dass** der Grundkörper (1) und/oder der Anschlussbereich (2) mit Aussparungen (9, 10) entlang der Längsachse ausgestattet ist.

7. Spritzschutz nach einem der vorhergehenden Ansprüche, **dadurch gekennzeichnet, dass** der Grundkörper (1) randseitig zumindest abschnittsweise mit einem elastischen Randbereich (3) ausgestattet ist.

8. Spritzschutz nach einem der vorhergehenden Ansprüche, **dadurch gekennzeichnet, dass** der Anschlussbereich (2) zumindest abschnittsweise mit einer Skala (8) entlang der Längsachse ausgestattet ist.

9. Spritzschutz nach einem der vorhergehenden Ansprüche, **dadurch gekennzeichnet, dass** die Skala als Vertiefung im Anschlussbereich (2) ausgestaltet ist.

10. Spritzschutz nach einem der vorhergehenden Ansprüche, **dadurch gekennzeichnet, dass** Vertiefungen der Skala (8) Kreuzungen ausbilden, die als Fixierhilfe für einen Bohrer geeignet sind.
